# EUROPEAN PATENT APPLICATION

(11) **EP 4 722 507 A1**
(43) Date of publication of application: **08.04.2026**
(21) Application number: 24205074.8
(22) Date of filing: 07.10.2024
(51) Int. Cl.: F01N 3/20, F02D 19/06

(54) **EXHAUST SYSTEMS AND METHODS FOR HYDROGEN INTERNAL COMBUSTION ENGINES**

(71) Applicant: Johnson Matthey Public Limited Company, London EC2V 7AD (GB)
(72) Inventor: CLARKE, Stuart, Reading, RG4 9NH (GB); PIGNON, John, Reading, RG4 9NH (GB); YORK, Andrew, Reading, RG4 9NH (GB)
(74) Representative: Johnson Matthey Public Limited Company

(57) **Abstract**

Exhaust systems (2) and methods for hydrogen internal combustion engines (ICE) (1). A valve (11) is used to direct exhaust gas through either a primary (8) or secondary channel (9) of the exhaust system (2) dependent on whether a switching condition is met. The primary channel (8) provides fluid communication for the exhaust gas to flow from an inlet (5), through a substrate (6) comprising a catalyst, and then to an outlet (7). The secondary channel (9) provides fluid communication for the exhaust gas to flow from the inlet (5) to the outlet (7) without passing through the substrate (6) comprising the catalyst.

## Description

### Field of the disclosure

The present invention relates to exhaust systems and methods applied to hydrogen internal combustion engines (ICEs).

### Background

Hydrogen has been receiving significant attention as a potential future alternative fuel for powering internal combustion engines (ICEs). It is envisioned that low-carbon hydrogen could be produced via hydrolysis of water using renewable electricity supplied by wind and solar powerplants. This produces so-called 'green hydrogen' with essentially zero greenhouse gas (GHG) emissions. Different "types" of hydrogen are commonly referred to using a colour scheme that reflects the degree of upstream GHG emissions. For example, black/grey hydrogen is produced from fossil fuels, black hydrogen being produced from coal and grey hydrogen being produced from natural gas using steam reformation of methane; blue hydrogen is essentially the same as grey hydrogen, but with its CO₂ sequestered or repurposed; turquoise hydrogen is produced from natural gas via pyrolysis (with solid carbon as a by-product); pink/red/purple hydrogen is produced using nuclear power though electrolysis, thermolysis or a combination thereof; white hydrogen is produced as a by-product of industrial processes such as fracking; and yellow hydrogen produced by electrolysis of water using grid electricity, typically derived from a mixture of renewable energies and fossil fuels.

It is known to fuel a compression ignition engine with a fuel mixture comprising diesel fuel and a minority fuel mass of hydrogen (see e.g. K.S. Varde et al, International Journal of Hydrogen Energy, 7, 549-555 (1983)). It is also known to fuel a spark-ignition engine with a fuel mixture comprising gasoline (petrol) and a minority fuel mass of hydrogen (see M. Al-Baghdadi et al, Energy Conversion and Management, 41, 77-91 (2000)). Hydrogen may be derived on the vehicle by use of an on-board fuel reformer (see e.g. WO2014/118574A1 and WO2012/063082A1). For further information, Applicant refers to DieselNet Technology Guide >> Alternative Fuels >> "Hydrogen" particularly section "5. Hydrogen Fuelled Engines", Author: H. Jääskeläinen, Revision 2023.07 available at https://dieselnet.com/tech/fuel_hydrogen. ph p.

In contrast to prior art disclosures of a minority fuel mass of hydrogen, the present invention is directed to exhaust systems and methods applied to internal combustion engines configured to run on a mixture of air and fuel, wherein the fuel of the mixture of air and fuel is a gaseous fuel comprising a majority fuel mass of hydrogen. A 'majority fuel mass' can be at least 70 vol% hydrogen gas (H₂), e.g. of one of the colour sources discussed above or a mixture of two or more thereof.

An exhaust system for H₂-fuelled ICEs typically comprises an oxidation catalyst for converting H₂ and optionally also NO in the exhaust to H₂O and NO₂. The catalyst may be provided on or in a substrate. Exhaust gas of ICE engines powered wholly or in part by H₂ include H₂ itself and oxides of nitrogen (NO and NO₂, collectively NOₓ). Combustion of lubricating oil can generate CO, hydrocarbons, and particulate matter, as well as urea-generated particles where selective catalytic reduction is used to reduce NOₓ. Particulates derived from these sources may require filtration. Ammonia emissions could also be possible under conditions that generate rich combustion. To compare to the redox composition of prior art diesel and gasoline exhaust gas, the lambda value of exhaust gases emitted by internal combustion engines configured to run on a mixture of air and fuel, wherein the fuel of the mixture of air and fuel is a gaseous fuel comprising a majority fuel mass of H₂, can vary widely, e.g. from 1 to 30, which can make catalytic aftertreatment difficult. Lambda can be calculated using the Brettschneider Equation

H₂ ICEs typically produce relatively high water levels in their exhaust gases compared to ICEs fuelled by gasoline or diesel. For example, average water levels during World Harmonized Transient Cycle (WHTC) tests may be 15-20%. At idle, water levels may be around 12%. Maximum water levels of up to 30% may be encountered, for example during a cold start of the H₂ ICE. The relatively high water content of the exhaust gases, especially during cold starts, is an additional factor that can make catalytic aftertreatment difficult. For example, high water content in the exhaust gas may lead to leaching of catalytic components from the catalytic composition and/or accelerated ageing of the substrate catalyst/impact on catalyst durability.

Applicant has now developed an exhaust system engineering design for H₂ ICE engines to assist with managing the relatively high water exhaust gas exposure of catalysts disposed in the exhaust system, with the goal of extending the durability and working life of the catalyst.

### Summary of the disclosure

In a first aspect of the present invention, there is provided an exhaust system of a hydrogen internal combustion engine (ICE), comprising:
- an inlet fluidly coupled to the hydrogen ICE and configured to receive exhaust gas from the hydrogen ICE;
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve located in or upstream of the primary channel and operable to control flow of the exhaust gas between the primary channel and the secondary channel; and
- a controller configured to operate the exhaust system in a primary mode and in a secondary mode;

in the secondary mode the valve is configured to direct the exhaust gas through the secondary channel, and in the primary mode the valve is configured to direct the exhaust gas through the primary channel;
the controller being configured to operate the exhaust system in the secondary mode subject to a switching condition not being met, and the controller being configured to operate the exhaust system in the primary mode on detection of the switching condition being met;
wherein the switching condition comprises or consists of:
   - a water content of the exhaust gas being below a threshold value; and/or
   - a time period elapsed from a start-up event exceeding a threshold value; and/or
   - a temperature of the exhaust gas being above a threshold value; and/or
   - a temperature of one or more components of the hydrogen ICE being above a threshold value; and/or
   - a temperature of one or more substrate.

By provision of the primary and secondary channels together with the ability to operate in the secondary mode, the exhaust system of the present invention enables the exhaust gas to bypass the substrate at times when a water content of the exhaust gas is expected to be undesirably high. Such times especially include upon start-up of the ICE in cold conditions.

By so doing the risk of premature ageing of the substrate catalyst or leaching of catalytic components is reduced.

The switching conditions are configured to enable the exhaust system to switch to the primary mode when the water content of the exhaust gas is, or is expected to be, at an acceptably low level. The assessment may be based on a direct measure of the water content of the exhaust gas or, alternatively, based on a measurement of a suitable analogue, e.g. the time period elapsed from the start-up event and/or a temperature of the exhaust gas, and/or a temperature of one or more components of the hydrogen ICE (e.g. engine coolant fluid).

The controller may be configured to operate the exhaust system in the secondary mode on detection of a start-up event of the hydrogen ICE subject to the switching condition not being met. The start-up event may be, for example, a key-on event used to start up the engine. As noted above, use of the secondary mode on start-up, especially in cold conditions, can be of particular benefit since water levels in the exhaust gas may be particularly high at this stage of operation of the H₂ ICE.

The controller may be configured to always operate the exhaust system in the secondary mode on detection of a start-up event of the hydrogen ICE subject to the switching condition not being met. Consequently, in some examples the exhaust system may default to initially operating in the secondary mode when the switching condition is not met.

The controller may be configured to switch from operating in the primary mode back to operating in the secondary mode if the switching condition is no longer met. Thus, in some examples the exhaust system has the ability to switch between primary and secondary modes during running of the H₂ ICE as required. For example, this may be desirable during periods of idling of the engine. However, in other examples, it will be sufficient for the exhaust system to remain running in the primary mode (e.g. once the H₂ ICE has warmed up to its normal operating temperature) until the H₂ ICE is keyed off.

In the secondary mode the valve may be configured to direct all or substantially all of the exhaust gas through the secondary channel, and in the primary mode the valve may be configured to direct all or substantially all of the exhaust gas through the primary channel. It has been found to be of benefit in the secondary mode to direct all or substantially all of the exhaust gas through the secondary channel to minimise or eliminate any exhaust gas that has a high water content reaching the substrate during these times, in particular during cold start conditions.

The substrate is preferably located in the primary channel.

A portion of the secondary channel may be configured for heat exchange with the substrate. Of particular benefit is having that portion of the secondary channel thermally coupled to the portion of the primary channel that houses the substrate. This has been found to allow operation in the secondary mode to not only avoid the substrate being exposed to high water levels in the exhaust gas, but also to pre-heat the substrate so that upon switching to the primary mode the substrate is already at or nearer to its ideal operating temperature, for example its light-off temperature.

The primary channel and the secondary channel may share a common wall forming a heat exchange surface. In some examples the portion of the secondary channel co-axially surrounds at least a portion of the substrate. In some preferred examples the secondary channel co-axially surrounds the substrate along its full length. A co-axial arrangement is beneficial in providing an increased heat exchange surface between the secondary channel and the substrate. In addition, the secondary channel acts as an insulating jacket for the primary channel/substrate reducing heat losses from the substrate. This is beneficial, for example in maintaining the temperature of the substrate during low load or idle conditions of the H₂ ICE.

The secondary channel may merge with the primary channel downstream of the substrate and upstream of the outlet. This allows a combined outlet for the exhaust system to be implemented.

The secondary channel may optionally contain an adsorbent. The adsorbent may be a molecular sieve or alternatively a woven or non-woven fabric, optionally a gauze.

The secondary channel may comprise a drain for discharging condensed water.

The valve may consist of one or more valve elements. For example, the valve may comprise a first valve element located in the primary channel and a second valve element located in the secondary channel. The first and second valve elements may be configured to operate in a co-ordinated manner, e.g. with one valve element opening as the other valve element shuts. In some examples each valve element comprises a flap valve. In other examples each valve element comprises a poppet valve.

The valve may consist of a single valve element. The single valve element may be located, for example, in the primary channel or at a splitting point of the primary and secondary channels. Closure of the single valve element may force all of the exhaust gas into the secondary channel by completing occluding the primary channel or a path to the primary channel. In some examples the single valve element comprises a flap valve. In other examples the single valve element comprises a poppet valve.

In a second aspect of the present invention, there is provided an exhaust system of a hydrogen internal combustion engine (ICE), comprising:
- an inlet fluidly coupled to the hydrogen ICE and configured to receive exhaust gas from the hydrogen ICE;
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve located in or upstream of the primary channel and operable to control flow of the exhaust gas between the primary channel and the secondary channel; and
- a controller configured to operate the exhaust system in a primary mode and in a secondary mode;

in the secondary mode the valve is configured to direct the exhaust gas through the secondary channel, and in the primary mode the valve is configured to direct the exhaust gas through the primary channel;
the controller being configured to operate the exhaust system in the secondary mode subject to a switching condition not being met, and the controller being configured to operate the exhaust system in the primary mode on detection of the switching condition being met;
wherein the substrate is located in the primary channel and a portion of the secondary channel is configured for heat exchange with the substrate.

The features and advantages of the first aspect apply equally to the second aspect. In particular, as noted above, secondary mode of operation not only avoids the substrate being exposed to high water levels in the exhaust gas, but also pre-heats the substrate so that upon switching to the primary mode the substrate is already at or nearer to its ideal operating temperature, for example its light-off temperature.

The portion of the secondary channel may encase at least a portion of the substrate to form a heat exchanger for the substrate.

The switching condition may comprise or consist of:
- a water content of the exhaust gas being below a threshold value; and/or
- a time period elapsed from a start-up event exceeding a threshold value; and/or
- a temperature of the exhaust gas being above a threshold value; and/or
- a temperature of one or more components of the hydrogen ICE being above a threshold value and/or
- a temperature of one or more substrate.

The exhaust system of the first and/or second aspects described above may be coupled to a hydrogen internal combustion engine. The hydrogen internal combustion engine may be configured to run on a mixture of air and fuel, wherein the fuel of the mixture of air and fuel is a gaseous fuel comprising a majority fuel mass of hydrogen. A 'majority fuel mass' can be at least 70 vol% hydrogen gas (H₂). The hydrogen internal combustion engine may be coupled to a fuel reservoir containing a source of H₂.

In some examples the exhaust system of the first or second aspect additionally comprises a heater for additional heating of the exhaust gas before it reaches the substrate. The heater may be an electrical heater. In some examples the heater is located immediately upstream of the substrate. In some examples the heater may also function as a mixer, e.g. a static mixer. The heater may in this way generate turbulence in the exhaust gas as it enters the substrate thereby improving heat transfer between the exhaust gas and the substrate.

In a third aspect of the present invention, there is provided a method of treating emissions from a hydrogen internal combustion engine (ICE) by coupling an exhaust outlet of the hydrogen ICE to an inlet of an exhaust system such that the exhaust system receives exhaust gas from the hydrogen ICE, the exhaust system being of the type comprising:
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve in or upstream of the primary channel and operable to control flow of the exhaust gas between the primary channel and the secondary channel; and
- a controller configured to operate the exhaust system;

the method comprising the steps of:
   - using the controller to operate the valve to operate the exhaust system in a secondary mode subject to a switching condition not being met, wherein in the secondary mode the valve directs the exhaust gas through the secondary channel; and
   - operating the valve to switch to operating the exhaust system in a primary mode on detection of the switching condition being met, wherein in the primary mode the valve directs the exhaust gas through the primary channel;
wherein the switching condition comprises or consists of:
   - a water content of the exhaust gas being below a threshold value; and/or
   - a time period elapsed from a start-up event exceeding a threshold value; and/or
   - a temperature of the exhaust gas being above a threshold value; and/or
   - a temperature of one or more components of the hydrogen ICE being above a threshold value and/or
   - a temperature of one or more substrate.

The features and advantages of the first and second aspects apply equally to the third aspect.

The controller may operate the exhaust system in the secondary mode on detection of a start-up event of the hydrogen ICE subject to the switching condition not being met.

The controller may switch from operating in the primary mode back to operating in the secondary mode if the switching condition is no longer met.

In the secondary mode the exhaust gas optionally does not pass through a water separator or condenser.

Preferably in the secondary mode exhaust gas flowing through the secondary channel exchanges heat with the substrate to heat up the substrate.

In some examples in the secondary mode exhaust gas flowing through the secondary channel flows around at least a portion of the substrate, optionally flows co-axially around the substrate along its full length.

The method of the third aspect may be used with a hydrogen internal combustion engine. The hydrogen internal combustion engine may be configured to run on a mixture of air and fuel, wherein the fuel of the mixture of air and fuel is a gaseous fuel comprising a majority fuel mass of hydrogen. A 'majority fuel mass' can be at least 70 vol% hydrogen gas (H₂). The hydrogen internal combustion engine may be coupled to a fuel reservoir containing a source of H₂.

In a fourth aspect of the present invention, there is provided a controller configured to operate an exhaust system and/or a hydrogen internal combustion engine coupled to an exhaust system using the method of the third aspect of the present invention.

The features and advantages of the first to third aspects apply equally to the fourth aspect.

The controller may comprise or consist of a pre-programmed computer processor unit.

H₂-ICE engines can be spark-ignition (SI) engines or High-Pressure Direct Injection (HPDI) engines, such as pilot injection HDPI engines, a variation on commercially available heavy-duty natural gas engine technology. For the avoidance of any doubt, the claimed invention is intended to cover exhaust systems and methods applied to both SI and HPDI engines.

In any of the aspects of the present invention the substrate can be a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metalloaluminosilicates (such as cordierite and spudomene), or a mixture or mixed oxide of any two or more thereof.

The metallic substrates may be made of any suitable metal, and in particular heat-resistant metals and metal alloys such as titanium and stainless steel as well as ferritic alloys containing iron, nickel, chromium, and/or aluminium in addition to other trace metals.

The substrate may be a flow-through substrate, e.g., a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may have porous channel walls which allows catalyst coatings to penetrate into the substrate walls. For certain applications, the flow-through monolith substrate has a cell density of about 600 to 800 cells per square inch, and/or an average internal wall thickness of about 0.18-0.35 mm, or about 0.20-0.25 mm. For certain other applications, the flow-through monolith substrate has a low cell density of about 150-600 cells per square inch, or about 200-400 cells per square inch.

The substrate may be a filter substrate. For example, the filter substrate may be a wall-flow monolith filter substrate. The channels of a wall-flow filter are alternately blocked, which allow the exhaust gas stream to enter a channel from the inlet, then flow through the channel walls, and exit the filter from a different channel leading to the outlet.

The substrate may comprise a washcoat. The washcoat can be a composition that coats on and/or within the channel walls. The washcoat generally comprises a catalyst composition. The catalyst composition can be a diesel oxidation catalyst (DOC), a three-way catalyst (TWC), a NOₓ absorber, a selective reduction catalyst (SCR), or a hydrocarbon trap, for example.

When the catalyst composition is DOC catalyst, the washcoat generally comprises one or more platinum group metals (PGM). Preferably the PGMs are present in a total amount such that the final coating contains at least 1 g/ft³. In addition to the PGM, the washcoat may comprises a support material. Suitable support materials include silica, alumina, ceria, ceria-zirconia and the like. Preferably the support material comprises alumina. One or more support materials may be present. The support material such as alumina can be doped with a dopant. The dopant can be selected from the group consisting of La, Sr, Si, Ba, Y, Pr, Nd, Ce, and mixtures thereof. Preferably, the dopant is La, Ba, or Ce. Most preferably, the dopant is La. The dopant content in the inorganic oxide support can be from 1 to 30 wt%.

When the catalyst composition is TWC catalyst, the catalyst comprises one or more platinum group metals (PGM), a support material, and an oxygen storage capacity (OSC) material. Suitable OSC material may comprises a mixed oxide of cerium, zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

The present invention finds particular application where the catalyst composition is for selective catalytic reduction (SCR). In particular, it has been found that the catalytic components of SCR compositions, in particular copper- or vanadium-containing SCR compositions can be prone to leaching when exposed to high water levels. When the catalyst composition is SCR catalyst, the catalyst generally comprises an oxide of a base metal, a molecular sieve, a metal-exchanged molecular sieve, or a mixture thereof. The base metal can be selected from the group consisting of cerium (Ce), chromium (Cr), cobalt (Co), copper (Cu), iron (Fe), manganese (Mn), molybdenum (Mo), nickel (Ni), tungsten (W), vanadium (V), and mixtures thereof. SCR catalysts consisting of vanadium supported on a refractory metal oxide such as alumina, silica, zirconia, titania, ceria and combinations thereof are well known and widely used commercially in mobile applications. The SCR catalyst may comprise vanadium and cerium.

The SCR catalyst can comprise a molecular sieve or a metal-exchanged molecular sieve. As is used herein "molecular sieve" is understood to mean a metastable material containing tiny pores of a precise and uniform size that may be used as an adsorbent for gases or liquids. The molecular sieve can be a zeolitic molecular sieve, a non-zeolitic molecular sieve, or a mixture thereof.

A zeolitic molecular sieve is a microporous aluminosilicate having any one of the framework structures listed in the Database of Zeolite Structures published by the International Zeolite Association (IZA). The framework structures include, but are not limited to those of the CHA, BEA, FAU, LTA, MFI, and MOR types. Non-limiting examples of zeolites having these structures include chabazite, faujasite, zeolite Y, ultrastable zeolite Y, beta zeolite, mordenite, silicalite, zeolite X, and ZSM-5. Aluminosilicate zeolites can have a silica-to-alumina molar ratio (SAR, defined as SiO₂/Al₂O₃) from 5 to 200, from 10 to 180, or from about 20 to 150.

As used herein, the term "non-zeolitic molecular sieve" refers to corner sharing tetrahedral frameworks where at least a portion of the tetrahedral sites are occupied by an element other than silicon or aluminium. Specific non-limiting examples of non-zeolitic molecular sieves include silicoaluminophosphates such as SAPO-34, SAPO-37 and SAPO-44. The silicoaluminophosphates can have framework structures that contain framework elements that are found in zeolites, such as BEA, CHA, FAU, LTA, MFI, MOR and other types.

In any of the aspects of the present invention the term "controller" may refer to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc. In some preferred examples the controller comprises or consists of a pre-programmed computer processor unit.

### Brief description of the drawings

Aspects and embodiments of the present disclosure will now be described, by way of example only, with reference to the accompanying drawings, in which:
Figure 1 is a block diagram of a hydrogen internal combustion engine and an exhaust system according to the present invention;
Figure 2 is a schematic diagram of a first embodiment of an exhaust system of a hydrogen internal combustion engine according to the present invention;
Figure 3 is a schematic diagram of a second embodiment of an exhaust system of a hydrogen internal combustion engine according to the present invention operating in a secondary mode;
Figure 4 is a schematic diagram of the exhaust system of Figure 3 operating in a primary mode; and
Figure 5 is a flow chart of a method of treating emissions from a hydrogen internal combustion engine according to the present invention.

### Detailed description

The skilled reader will recognise that one or more features of one aspect or embodiment of the present disclosure may be combined with one or more features of any other aspect or embodiment of the present disclosure unless the immediate context teaches otherwise.

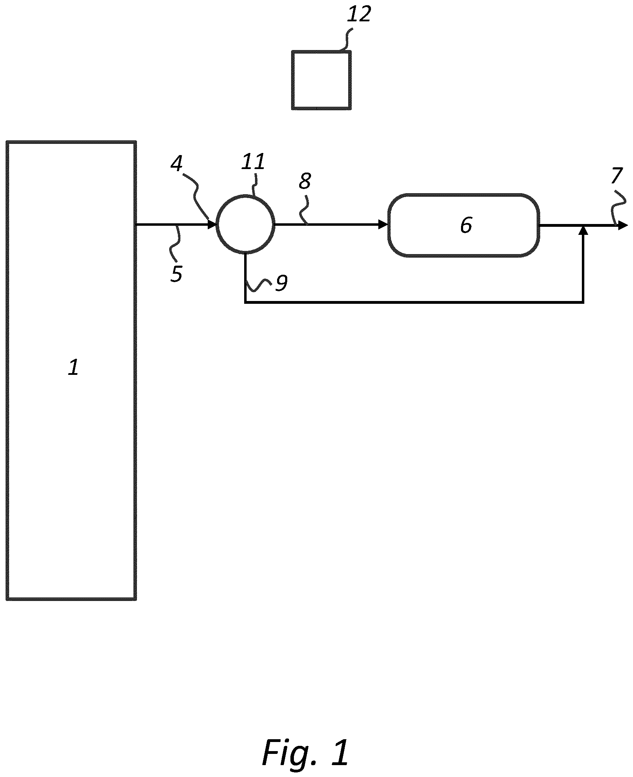

Figure 1 shows a hydrogen internal combustion engine 1 (ICE) and an exhaust system 2 according to the present invention.

The exhaust system 2 comprises an inlet 4 fluidly coupled to the hydrogen ICE 1 that is configured to receive exhaust gas from the hydrogen ICE 1, for example along an inlet conduit 5.

The exhaust system 2 further comprises a substrate 6 for treating the exhaust gas and an outlet 7 for discharging the exhaust gas.

A primary channel 8 is provided to enable fluid communication for the exhaust gas to flow from the inlet 4, through the substrate 6, and then to the outlet 7. In addition, a secondary channel 9 is provided to enable fluid communication for the exhaust gas to flow from the inlet 4 to the outlet 7 without passing through the substrate 6.

A valve 11 is located in or upstream of the primary channel 8 and is operable to control flow of the exhaust gas between the primary channel 8 and the secondary channel 9.

The valve 11 may comprise or consist of one or more valve elements 11a, 11b.

A controller 12 is provided that is configured to operate the exhaust system 2 in a primary mode and in a secondary mode. The controller 12 may be linked in a wired or wireless manner to the required components of the exhaust system 2, e.g. the valve 11, etc. In some preferred examples the controller 12 comprises or consists of a pre-programmed computer processor unit.

In the secondary mode the valve 11 is configured to direct the exhaust gas through the secondary channel 9 such that the exhaust gas flows to the outlet 7 without contacting the substrate 6. In the primary mode the valve 11 is configured to direct the exhaust gas through the primary channel 8 so that it passes through the substrate 6.

The controller 12 is configured to operate the exhaust system 2 in the secondary mode subject to a switching condition not being met. The controller 12 is configured to operate the exhaust system 2 in the primary mode on detection of the switching condition being met.

The switching condition comprises or consists of:
- a water content of the exhaust gas being below a threshold value; and/or
- a time period elapsed from a start-up event exceeding a threshold value; and/or
- a temperature of the exhaust gas being above a threshold value; and/or
- a temperature of one or more components of the hydrogen ICE 1 being above a threshold value and/or
- a temperature of one or more substrate.

The water content of the exhaust gas may be measured directly or indirectly. For example a humidity sensor may be provided in the exhaust system 2 or the upstream hydrogen ICE 1. The time period may be measured by the controller 12, for example. The temperature of the exhaust gas may be measured directly, for example by means of a temperature sensor within the primary channel 8 or secondary channel 9 or in the inlet conduit 5 or in the upstream hydrogen ICE 1. Alternatively, the temperature may be inferred from a temperature of another component of the hydrogen ICE 1, for example the engine coolant fluid temperature.

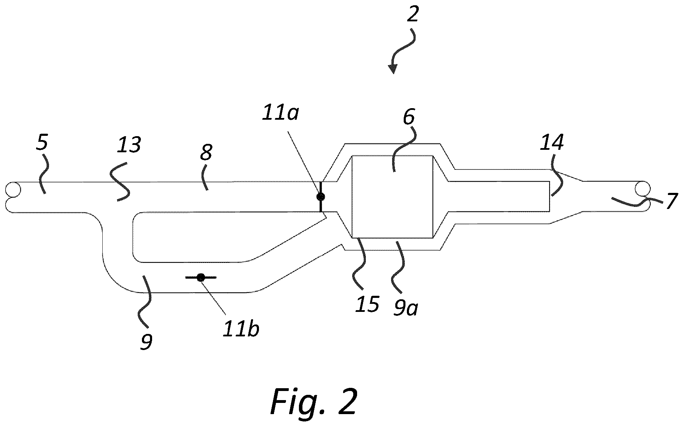

Figure 2 shows a first embodiment of an exhaust system 2 according to the present invention. In this embodiment the substrate 6 may be of the types described above, for example a flow-through SCR substrate.

The primary channel 8 and the secondary channel 9 run in parallel to each other from a first junction 13 where the channels split to a second junction 14 where the channels merge together. The second junction 14 is located downstream of the substrate 6.

The substrate 6 is located in the primary channel 8.

A portion 9a of the secondary channel 9 is configured for heat exchange with the substrate 6. In the portion 9a, the primary channel 8 and the secondary channel 9 share a common wall 15 forming a heat exchange surface. The portion 9a of the secondary channel 9 co-axially surrounds the substrate 6 and forms an insulating jacket. In the illustrated example the secondary channel 9, in particular the portion 9a, co-axially surrounds the substrate 6 along its full length.

The secondary channel 9 merges with the primary channel 8 downstream of the substrate 6 and upstream of the outlet 7 at the second junction 14. This allows a combined outlet for the exhaust system 2 to be implemented.

In the illustrated example of Figure 2, two valve elements 11a, 11b are shown, each comprising a flap valve. The valve elements 11a, 11b are interlinked to move in a co-ordinated manner. In alternative examples a single valve element, e.g. a flap valve, may be provided at the first junction 13 where the primary channel 8 and the secondary channel 9 split.

In use, the controller 12 is configured to operate the exhaust system 2 in the secondary mode on detection of a start-up event of the hydrogen ICE 1 subject to the switching condition not being met. The start-up event may be, for example, a key-on operation of the hydrogen ICE 1.

During operation in the secondary mode the exhaust gas is diverted into the secondary channel 9 due to the closed valve element 11a in the primary channel 8. Exhaust gas flows through the secondary channel 9 past the open valve element 11b and through the portion 9a to the outlet 7. In so doing the exhaust gas by-passes the substrate 6. Heat from the exhaust gas is transferred via the common wall 15 to heat up the substrate 6.

Continued operation of the hydrogen ICE 1 will result in the exhaust gas temperature and the engine coolant fluid temperature increasing and/or a threshold time period being exceeded. Consequently, the switching condition will then be met and the controller 12 will switch operation to the primary mode by operation of the valve 11. In the primary mode the exhaust gas flows through to the substrate 6 due to the closed valve element 11b that occludes the secondary channel 9 and the open valve element 11a.

In some examples the controller 12 is configured to switch from operating in the primary mode back to operating in the secondary mode if the switching condition is no longer met, for example possibly during extended periods of idling.

In some examples in the secondary mode the valve 11 is configured to direct all or substantially all of the exhaust gas through the secondary channel 9, and in the primary mode the valve 11 is configured to direct all or substantially all of the exhaust gas through the primary channel 8.

In some examples the controller 12 is configured to always operate the exhaust system 2 in the secondary mode on detection of a start-up event of the hydrogen ICE 1 subject to the switching condition not being met. For example, after a key-on operation of the hydrogen ICE 1 the secondary mode may be the default mode of operation subject to the switching condition not being met. Thus, in cold start-up conditions the secondary mode may be the initial mode of operation until the hydrogen ICE 1 has warmed up.

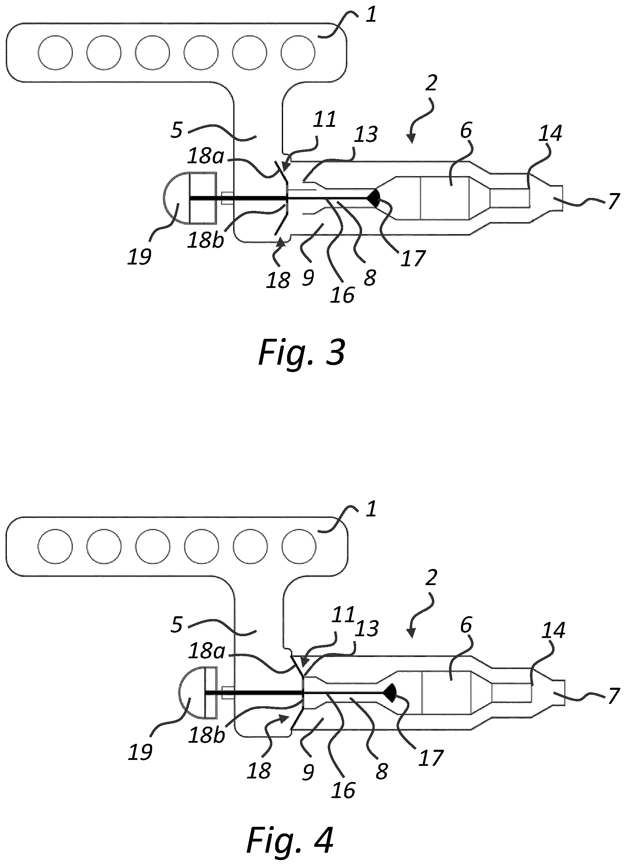

Figures 3 and 4 show a second embodiment of an exhaust system 2 according to the present invention. In this embodiment, the valve 11 controlling exhaust gas flow between the primary channel 8 and the secondary channel 9 is a poppet valve.

The poppet valve 11 may be positioned in the primary channel 8 and/or at the first junction 13. The second junction 14 may be formed at the terminus of the primary channel 8 as shown in Figure 3. In the illustrated example, the poppet valve comprises a valve stem 16 having a sealing head 17 at a distal end thereof and a sealing flange 18 disposed part-way along the valve stem. An actuator 19, e.g. a solenoid-controlled actuator, is also provided for driving reciprocal movement of the valve stem 16 as commanded by the controller 12. The sealing flange 18 comprises an annular sealing element 18a and a central apertured portion 18b comprising, for example a mesh, an orificed plate, etc.

In the secondary mode (Figure 3) the valve stem 16 is retracted by the actuator 19 (to the left as viewed in the Figure) so that the sealing head 17 seals against the wall of the primary channel 8 closing off the primary channel 8. At the same time the sealing flange 18 is displaced out of contact with the walls of the primary channel 8 and the secondary channel 9 at the first junction 13 opening thereby opening an entrance into the secondary channel 9.

In the primary mode (Figure 4) the valve stem 16 is extended by the actuator 19 (to the right as viewed in the Figure) so that the sealing head 17 is unsealed from the wall of the primary channel 8 opening the primary channel 8. At the same time the sealing flange 18 is moved into contact with the walls of the primary channel 8 and the secondary channel 9 at the first junction 13. The annular sealing element 18a closes off the entrance into the secondary channel 9. The central apertured portion 18b enables flow of exhaust gas into the primary channel 8.

Operation of the second embodiment is as described above for the first embodiment with the flow of exhaust gas between the primary channel 8 and the secondary channel 9 being under the control of the controller 12 through operation of the valve 11, in this case the poppet valve.

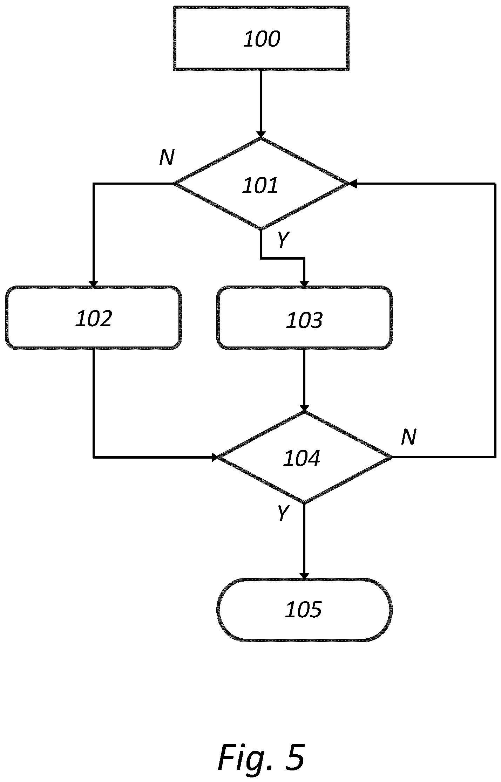

Figure 5 illustrates in flow-chart form operation of the exhaust system 2 of the embodiments. This flow-chart operation may be controlled e.g. by a pre-programmed processor of an Engine Control Unit (ECU). At step 100 a key-on event of the hydrogen ICE 1 is detected. At step 101 a determination is made whether the switching condition is met. If the switching condition is not met, the method moves to step 102 wherein the secondary mode of operation is used. Alternatively, if at step 101 the determination is that the switching condition is met the method moves to step 103 and the primary mode of operation is used. At step 104 a determination is made whether a key-off operation of the hydrogen ICE 1 is detected. If yes, the method terminates at step 105 by switching off the hydrogen ICE 1. In no, the method returns to step 101 for a further determination of whether the switching condition is now (or still) met.

The invention can also be defined according to one or more of the following statements of invention:
1. An exhaust system of a hydrogen internal combustion engine (ICE), comprising:
   - an inlet fluidly coupled to the hydrogen ICE and configured to receive exhaust gas from the hydrogen ICE;
   - a substrate comprising a catalyst for treating the exhaust gas;
   - an outlet for discharging the exhaust gas;
   - a primary channel that provides fluid communication for the exhaust gas to flow from the inlet, through the substrate, and then to the outlet;
   - a secondary channel that provides fluid communication for the exhaust gas to flow from the inlet to the outlet without passing through the substrate;
   - a valve located in or upstream of the primary channel and operable to control flow of the exhaust gas between the primary channel and the secondary channel; and
   - a controller configured to operate the exhaust system in a primary mode and in a secondary mode;

   in the secondary mode the valve is configured to direct the exhaust gas through the secondary channel, and in the primary mode the valve is configured to direct the exhaust gas through the primary channel;
   the controller being configured to operate the exhaust system in the secondary mode subject to a switching condition not being met, and the controller being configured to operate the exhaust system in the primary mode on detection of the switching condition being met;
      wherein the switching condition comprises or consists of:
      - a water content of the exhaust gas being below a threshold value; and/or
      - a time period elapsed from a start-up event exceeding a threshold value; and/or
      - a temperature of the exhaust gas being above a threshold value; and/or
      - a temperature of one or more components of the hydrogen ICE being above a threshold value; and/or
      - a temperature of one or more substrate.
2. The exhaust system of 1, wherein the controller is configured to operate the exhaust system in the secondary mode on detection of a start-up event of the hydrogen ICE subject to the switching condition not being met.
3. The exhaust system of 1 or 2, wherein the controller is configured to switch from operating in the primary mode back to operating in the secondary mode if the switching condition is no longer met.
4. The exhaust system of any of 1 to 3, wherein in the secondary mode the valve is configured to direct all or substantially all of the exhaust gas through the secondary channel, and in the primary mode the valve is configured to direct all or substantially all of the exhaust gas through the primary channel.
5. The exhaust system of any of 1 to 4, wherein the controller is configured to always operate the exhaust system in the secondary mode on detection of a start-up event of the hydrogen ICE subject to the switching condition not being met.
6. The exhaust system of any of 1 to 5, wherein the substrate is located in the primary channel.
7. The exhaust system of any of 1 to 6, wherein a portion of the secondary channel is configured for heat exchange with the substrate.
8. The exhaust system of 7, wherein the portion of the secondary channel is thermally coupled to that portion of the primary channel housing the substrate.
9. The exhaust system of 8, wherein the primary channel and the secondary channel share a common wall forming a heat exchange surface.
10. The exhaust system of any one of 7 to 9, wherein the portion of the secondary channel co-axially surrounds at least a portion of the substrate, optionally co-axially surrounds the substrate along its full length.
11. The exhaust system of any of 1 to 10, wherein the secondary channel merges with the primary channel downstream of the substrate and upstream of the outlet.
12. The exhaust system of any of 1 to 11, wherein the secondary channel contains an adsorbent; and optionally the adsorbent is a woven or non-woven fabric, or a molecular sieve.
13. The exhaust system of any of 1 to 12, wherein the secondary channel comprises a drain for discharging condensed water.
14. The exhaust system of any of 1 to 13, wherein the valve comprises a flap valve or poppet valve.
15. An exhaust system of a hydrogen internal combustion engine (ICE), comprising:
   - an inlet fluidly coupled to the hydrogen ICE and configured to receive exhaust gas from the hydrogen ICE;
   - a substrate comprising a catalyst for treating the exhaust gas;
   - an outlet for discharging the exhaust gas;
   - a primary channel that provides fluid communication for the exhaust gas to flow from the inlet, through the substrate, and then to the outlet;
   - a secondary channel that provides fluid communication for the exhaust gas to flow from the inlet to the outlet without passing through the substrate;
   - a valve located in or upstream of the primary channel and operable to control flow of the exhaust gas between the primary channel and the secondary channel; and
   - a controller configured to operate the exhaust system in a primary mode and in a secondary mode;

   in the secondary mode the valve is configured to direct the exhaust gas through the secondary channel, and in the primary mode the valve is configured to direct the exhaust gas through the primary channel;
   the controller being configured to operate the exhaust system in the secondary mode subject to a switching condition not being met, and the controller being configured to operate the exhaust system in the primary mode on detection of the switching condition being met;
   wherein the substrate is located in the primary channel and a portion of the secondary channel is configured for heat exchange with the substrate.
16. The exhaust system of 15, wherein the portion of the secondary channel encases at least a portion of the substrate to form a heat exchanger for the substrate.
17. The exhaust system of 15 or 16, wherein the switching condition comprises or consists of:
   - a water content of the exhaust gas being below a threshold value; and/or
   - a time period elapsed from a start-up event exceeding a threshold value; and/or
   - a temperature of the exhaust gas being above a threshold value; and/or
   - a temperature of one or more components of the hydrogen ICE being above a threshold value; and/or
   - a temperature of one or more substrate.
18. A method of treating emissions from a hydrogen internal combustion engine (ICE) by coupling an exhaust outlet of the hydrogen ICE to an inlet of an exhaust system such that the exhaust system receives exhaust gas from the hydrogen ICE, the exhaust system being of the type comprising:
   - a substrate comprising a catalyst for treating the exhaust gas;
   - an outlet for discharging the exhaust gas;
   - a primary channel that provides fluid communication for the exhaust gas to flow from the inlet, through the substrate, and then to the outlet;
   - a secondary channel that provides fluid communication for the exhaust gas to flow from the inlet to the outlet without passing through the substrate;
   - a valve in or upstream of the primary channel and operable to control flow of the exhaust gas between the primary channel and the secondary channel; and
   - a controller configured to operate the exhaust system;
   the method comprising the steps of:
   - using the controller to operate the valve to operate the exhaust system in a secondary mode subject to a switching condition not being met, wherein in the secondary mode the valve directs the exhaust gas through the secondary channel; and
   - operating the valve to switch to operating the exhaust system in a primary mode on detection of the switching condition being met, wherein in the primary mode the valve directs the exhaust gas through the primary channel;
   wherein the switching condition comprises or consists of:
   - a water content of the exhaust gas being below a threshold value; and/or
   - a time period elapsed from a start-up event exceeding a threshold value; and/or
   - a temperature of the exhaust gas being above a threshold value; and/or
   - a temperature of one or more components of the hydrogen ICE being above a threshold value; and/or
   - a temperature of one or more substrate.
19. The method of 18, wherein the controller operates the exhaust system in the secondary mode on detection of a start-up event of the hydrogen ICE subject to the switching condition not being met.
20. The method of 18 or 19, wherein the controller switches from operating in the primary mode back to operating in the secondary mode if the switching condition is no longer met.
21. The method of any one of 18 to 20, wherein, in the secondary mode the exhaust gas does not pass through a water separator or condenser.
22. The method of any one of 18 to 21, wherein in the secondary mode exhaust gas flowing through the secondary channel exchanges heat with the substrate to heat up the substrate.
23. The method of any one of 18 to 22, wherein in the secondary mode exhaust gas flowing through the secondary channel flows around at least a portion of the substrate, optionally flows co-axially around the substrate along its full length.
24. A controller configured to operate an exhaust system using the method of any one of 18 to 23.

For the avoidance of any doubt, the entire content of any and all documents cited herein is incorporated by reference into the present application.

## Claims

1. An exhaust system of a hydrogen internal combustion engine (ICE), comprising:
- an inlet fluidly coupled to the hydrogen ICE and configured to receive exhaust gas from the hydrogen ICE;
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve located in or upstream of the primary channel and operable to control flow of the exhaust gas between the primary channel and the secondary channel; and
- a controller configured to operate the exhaust system in a primary mode and in a secondary mode;
in the secondary mode the valve is configured to direct the exhaust gas through the secondary channel, and in the primary mode the valve is configured to direct the exhaust gas through the primary channel;
the controller being configured to operate the exhaust system in the secondary mode subject to a switching condition not being met, and the controller being configured to operate the exhaust system in the primary mode on detection of the switching condition being met;
wherein the switching condition comprises or consists of:
- a water content of the exhaust gas being below a threshold value; and/or
- a time period elapsed from a start-up event exceeding a threshold value; and/or
- a temperature of the exhaust gas being above a threshold value; and/or
- a temperature of one or more components of the hydrogen ICE being above a threshold value; and/or
- a temperature of one or more substrate.

2. The exhaust system of claim 1, wherein the controller is configured to operate the exhaust system in the secondary mode on detection of a start-up event of the hydrogen ICE subject to the switching condition not being met.

3. The exhaust system of claim 1 or claim 2, wherein the controller is configured to switch from operating in the primary mode back to operating in the secondary mode if the switching condition is no longer met.

4. The exhaust system of any preceding claim, wherein in the secondary mode the valve is configured to direct all or substantially all of the exhaust gas through the secondary channel, and in the primary mode the valve is configured to direct all or substantially all of the exhaust gas through the primary channel.

5. The exhaust system of any preceding claim, wherein the controller is configured to always operate the exhaust system in the secondary mode on detection of a start-up event of the hydrogen ICE subject to the switching condition not being met.

6. The exhaust system of any preceding claim, wherein the substrate is located in the primary channel.

7. The exhaust system of any preceding claim, wherein a portion of the secondary channel is configured for heat exchange with the substrate.

8. The exhaust system of claim 7, wherein the portion of the secondary channel is thermally coupled to that portion of the primary channel housing the substrate.

9. The exhaust system of claim 8, wherein the primary channel and the secondary channel share a common wall forming a heat exchange surface.

10. The exhaust system of any one of claims 7 to 9, wherein the portion of the secondary channel co-axially surrounds at least a portion of the substrate, optionally co-axially surrounds the substrate along its full length.

11. The exhaust system of any preceding claim, wherein the secondary channel merges with the primary channel downstream of the substrate and upstream of the outlet.

12. The exhaust system of any preceding claim, wherein the secondary channel contains an adsorbent; and optionally the adsorbent is a woven or non-woven fabric, or a molecular sieve.

13. An exhaust system of a hydrogen internal combustion engine (ICE), comprising:
- an inlet fluidly coupled to the hydrogen ICE and configured to receive exhaust gas from the hydrogen ICE;
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve located in or upstream of the primary channel and operable to control flow of the exhaust gas between the primary channel and the secondary channel; and
- a controller configured to operate the exhaust system in a primary mode and in a secondary mode;
in the secondary mode the valve is configured to direct the exhaust gas through the secondary channel, and in the primary mode the valve is configured to direct the exhaust gas through the primary channel;
the controller being configured to operate the exhaust system in the secondary mode subject to a switching condition not being met, and the controller being configured to operate the exhaust system in the primary mode on detection of the switching condition being met;
wherein the substrate is located in the primary channel and a portion of the secondary channel is configured for heat exchange with the substrate.

14. A method of treating emissions from a hydrogen internal combustion engine (ICE) by coupling an exhaust outlet of the hydrogen ICE to an inlet of an exhaust system such that the exhaust system receives exhaust gas from the hydrogen ICE, the exhaust system being of the type comprising:
- a substrate comprising a catalyst for treating the exhaust gas;
- an outlet for discharging the exhaust gas;
- a primary channel that provides fluid communication for the exhaust gas to flow from the inlet, through the substrate, and then to the outlet;
- a secondary channel that provides fluid communication for the exhaust gas to flow from the inlet to the outlet without passing through the substrate;
- a valve in or upstream of the primary channel and operable to control flow of the exhaust gas between the primary channel and the secondary channel; and
- a controller configured to operate the exhaust system;
the method comprising the steps of:
- using the controller to operate the valve to operate the exhaust system in a secondary mode subject to a switching condition not being met, wherein in the secondary mode the valve directs the exhaust gas through the secondary channel; and
- operating the valve to switch to operating the exhaust system in a primary mode on detection of the switching condition being met, wherein in the primary mode the valve directs the exhaust gas through the primary channel;
wherein the switching condition comprises or consists of:
- a water content of the exhaust gas being below a threshold value; and/or
- a time period elapsed from a start-up event exceeding a threshold value; and/or
- a temperature of the exhaust gas being above a threshold value; and/or
- a temperature of one or more components of the hydrogen ICE being above a threshold value; and/or
- a temperature of one or more substrate.

15. A controller configured to operate an exhaust system using the method of any one of claim 14.
